# EUROPEAN PATENT APPLICATION

(11) **EP 3 543 741 A1**
(43) Date of publication of application: **25.09.2019**
(21) Application number: 19164334.5
(22) Date of filing: 21.03.2019
(51) Int. Cl.: G01S 17/89, G01S 7/481, G01S 17/02

(54) **LIGHT MODULATING LIDAR SYSTEM**

(30) Priority: 21.03.2018 US 201815927462
(71) Applicant: Visteon Global Technologies, Inc., Van Buren Township, MI 48111-5711 (US)
(72) Inventor: WILMER, Thorsten, 76646 Bruchsal (DE); NGUYEN, Giang-Nam, 76227 Karlsruhe (DE); WANG, Kai, 76275 Ettlingen (DE)
(74) Representative: Dummett Copp LLP

(57) **Abstract**

A LIDAR system (20) includes a laser (22) projecting a first beam (24) of laser light upon a spatial light modulator, such as a liquid crystal on silicon (LCOS) device (26), to project a second beam (28) having a pattern of points (30) of relatively high intensity separated from one another by regions of relatively low intensity. A first camera (32) has a first field of view (34) and generates an image signal (38) of the pattern of points of the second beam overlaid upon an image of one or more objects within the first field of view. A picture creation module (46) generates the pattern of points and communicates it to the spatial light modulator (26). An image processing module (48) detects the position and distance of the one or more objects using the image signal. The picture creation module may generate one of a plurality of different patterns (30', 30", 30"') to increase the spatial resolution of the LIDAR system.

## Description

### BACKGROUND

LIDAR, which stands for Light Detection and Ranging, is a remote sensing method that uses laser light to measure distance to a target object by illuminating the target object with laser light and measuring the reflected light with a sensor. LIDAR systems work on the same general principles of radar, but use laser light instead of radio frequency radiation. LIDAR systems generally use pulsed laser light to measure distances. Differences in laser light return times can then be used to make digital 3-D representations of the target object. Optionally, differences in laser light wavelengths may be used to determine the relative velocity of the target object relative to the source of laser light, using the Doppler effect, however, velocity of a target object can also be determined by determining any changes in the measured distances to the target object over a time interval. LIDAR systems have a variety of applications including cartography, surveying, and in vehicular applications as an information source that can provide useful data for augmented or autonomous driving systems.

### SUMMARY

According to one aspect of this disclosure, there is provided a LIDAR system comprising:
a laser projecting a first beam of laser light upon a spatial light modulator (SLM) configured to modulate the first beam to project a second beam having a first pattern of points of relatively high intensity separated from one another by regions of relatively low intensity;
a first camera having a first field of view and generating an image signal of the first pattern of points of the second beam overlaid upon an image of one or more objects within the first field of view;
a picture creation module for generating the first pattern of points and to communicate the first pattern of points to the spatial light modulator; and
an image processing module in communication with the first camera to receive the image signal therefrom and to detect the position and distance of the one or more objects using the image signal.

According to another aspect of this disclosure, there is provided a LIDAR system comprising:
a laser projecting a first beam of laser light upon a spatial light modulator (SLM) being a liquid crystal on silicon (LCOS) device configured to modulate the first beam to project a second beam having a pattern of points of relatively high intensity separated from one another by regions of relatively low intensity;
a first camera having a first field of view and generating an image signal of the pattern of points of the second beam overlaid upon an image of one or more objects within the first field of view;
a controller including an image processing module in communication with the first camera to receive the image signal therefrom and to detect the position and distance of the one or more objects using the image signal; and
wherein the image processing module uses a location of one or more of the points of relatively high intensity and amplitude thereof relative to adjacent regions within the image signal in detecting the position and distance of the one or more objects.

A LIDAR system is disclosed which includes a laser projecting a first beam of laser light upon a spatial light modulator (SLM) configured to modulate the first beam to project a second beam having a pattern of points of relatively high intensity separated from one another by regions of relatively low intensity.

The LIDAR system includes a first camera having a first field of view to generate an image signal of the pattern of points of the second beam overlaid upon an image of one or more objects within the first field of view.

The LIDAR system further includes a controller including a picture creation module for generating the pattern of points and to communicate the pattern of points to the spatial light modulator, and including an image processing module in communication with the first camera to receive the image signal therefrom and to detect the position and distance of the one or more objects using the image signal.

According to another aspect of this disclosure, there is provided a method for operating a LIDAR system comprising:
projecting a first beam of laser light upon a spatial light modulator (SLM) by a laser;
modulating the first beam by the spatial light modulator to project a second beam having a pattern of points of varying intensity;
observing, by a first camera having a first field of view, an actual image including the pattern of the second beam overlaid upon an image of one or more objects;
generating an image signal by the first camera representing the actual image;
communicating the image signal from the first camera to the image processing module;
detecting a position and distance of the one or more objects by the image processing module by comparing the pattern of points with the actual image.

The method may further include the steps of generating the pattern of points by a picture creation module, communicating the pattern of points from the picture creation module to the spatial light modulator, and communicating the pattern of points from the picture creation module to an image processing module.

The step of detecting a position and distance of the one or more objects by the image processing module further includes using, by the image processing module, a location of one or more points of relatively high intensity and an amplitude thereof relative to adjacent regions within the actual image.

The method may further include the steps of observing, by a second camera, a second field of view as a subset of the first field of view; and communicating a corresponding image signal from the second camera to the image processing module to improve distance estimation of objects located far away from the LIDAR system.

Alternatively, the method may further include the step of observing, by a second camera, a second field of view different than the first field of view to provide a surround view of a wide area about the LIDAR system.

The method may further include projecting a different second beam to corresponding ones of the fields of view by each of a plurality of spatial light modulators.

The method may further include illuminating a corresponding one of the spatial light modulators with a corresponding first beam by each of a plurality of lasers.

### BRIEF DESCRIPTION OF THE DRAWINGS

Further details, features and advantages of designs of the invention result from the following description of embodiment examples in reference to the associated drawings, in which:
FIG. 1 is a block diagram showing an embodiment of a LIDAR system;
FIG. 2 is a block diagram showing another embodiment of a LIDAR system;
FIG. 3A is a diagram of a first pattern of points;
FIG. 3B is a diagram of a second pattern of points;
FIG. 3C is a diagram of a third pattern of points;
FIG. 4 is a diagram of a dynamic diffractive optical element in accordance with an embodiment for a LIDAR system;
FIG. 5A is a flow chart of a method for operating a LIDAR system;
FIG. 5B is a flow chart of additional steps in the method shown on FIG. 5A; and
FIG. 5C is a flow chart of additional steps in the method shown on FIG. 5A.

### DETAILED DESCRIPTION

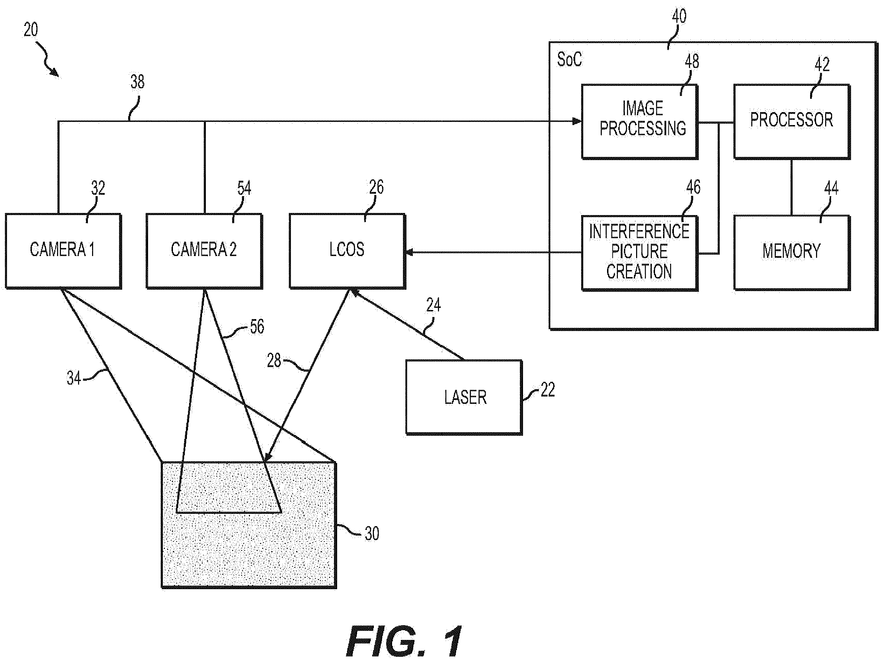

Recurring features are marked with identical reference numerals in the figures. A LIDAR system 20 is disclosed. As shown in the block diagram FIG. 1, an example embodiment of the LIDAR system 20 includes a laser 22 projecting a first beam 24 of pulsed laser light upon a spatial light modulator (SLM) 26, which is a liquid crystal on silicon (LCOS) device configured to modulate the first beam 24 and to project a second beam 28 having a pattern of points 30 of relatively high intensity separated from one another by regions of relatively low intensity. The liquid crystal on silicon (LCOS) spatial light modulator (SLM) 26 is an example of a solid state device, and therefore, the LIDAR system of this embodiment may be called a "solid state LIDAR." This is distinguishable from some LIDAR systems of the prior art which have an oscillating or rotating laser.

As shown in FIG. 1, the LIDAR system 20 also includes a first camera 32 having a first field of view 34 to generate an image signal 38 of the pattern of points 30 of the second beam 28 overlaid upon an image of one or more objects within the first field of view. The image of the one or more objects may be an image in a visible part of the spectrum, or may be an infra-red (IR) image, or may be a low-light image (also called a "night vision" image).

The first camera 32 and its associated image signal 38 may include any type of optical sensor and associated optical devices such as lenses, apertures, and/or shutters. The first camera 32 and its associated image signal 38 may be configured for any type of vision including, for example: black and white, color in visual wavelengths, infra-red (IR), or low-light operation, e.g. "night vision".

As shown in FIG. 1, the LIDAR system 20 also includes a controller 40, which may be a system-on-chip (SoC) type device, including a processor 42 and a computer readable non-transitory memory 44 and a picture creation module 46 for generating the pattern of points 30 and to communicate the pattern of points 30 to the spatial light modulator. The controller 40 also includes an image processing module 48 in communication with the first camera 32 to receive the image signal 38 therefrom and to detect the position and distance of the one or more objects using the image signal 38.

In this embodiment, and also the embodiments described below, the distance to each one of the points 30 can be determined by the image processing module 48 from a detected time delay between the emission time of a pulse of laser light in the first beam 24 and the reception time of the same pulse, after reflection or scattering of light from the at least one object of the light within each point, by the first camera 32 for each one of the points 30 of the second beam 28. For example, the time of the emitted pulse may be determined by an electrical signal (not shown) synchronized with the laser light pulses, this electrical signal being communicated from the laser 22 to the image processing module 48. Alternatively, the time of the emitted pulse may be determined from an electrical signal (not shown) communicated from a light sensor (not shown) to the image processing module 48, the light sensor receiving a portion of the first beam 24 in order to detect the emission time of each pulse as detected by the light sensor.

According to an aspect of the disclosure, the image processing module 48 may use a location of one or more of the points 30 of relatively high intensity and amplitude thereof relative to adjacent regions within the image signal 38 in detecting the position and distance of the one or more objects. In other words, the non-illuminated adjacent regions within the image signal 38 may provide a reference to determine the relative intensity of the relatively high intensity illuminated points 30. The pattern of points 30 may be dynamic and change over time. For example, the points may move to scan over different regions of space.

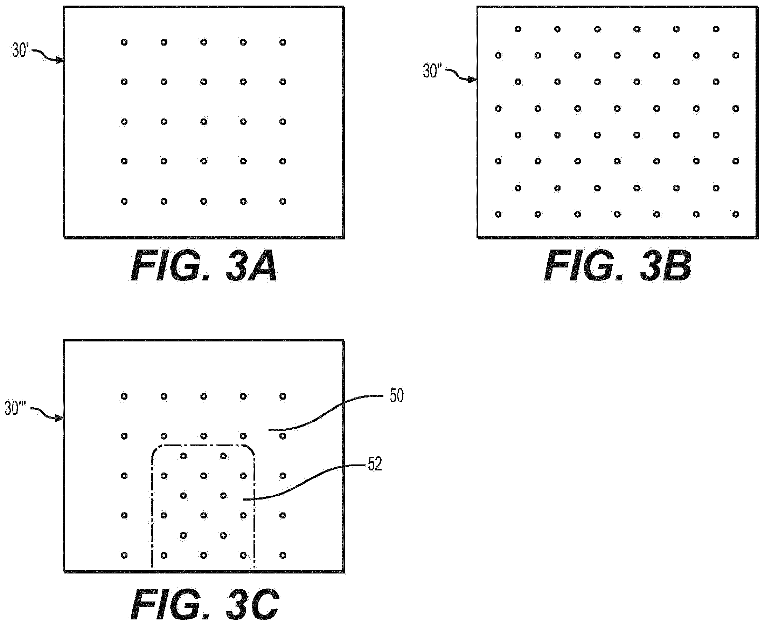

According to an aspect of the disclosure, the picture creation module 46 generates the pattern of points 30 as one of a plurality of different patterns 30', 30", 30'" to increase the spatial resolution of the LIDAR system 20. As shown in FIG. 3A, the plurality of different patterns 30', 30", 30'" may include a first pattern 30' having points arranged in a two-dimensional array of straight horizontal lines and straight vertical columns, and wherein the points in each of the straight horizontal lines are aligned in a horizontal direction with the points in adjacent ones of the straight horizontal lines. As shown in FIG. 3B, the plurality of different patterns 30', 30", 30'" may include a second pattern 30" having points arranged in a two-dimensional array of straight horizontal lines, and wherein the points in each of the straight horizontal lines are offset in a horizontal direction from the points in adjacent ones of the straight horizontal lines. As shown in FIG. 3C, the plurality of different patterns 30', 30", 30'" may include a third pattern 30'" including a first region 50 having a first density of points and including a second region 52 having a second density of points higher than the first density of points.

As shown in FIG. 1, the LIDAR system 20 may further include a second camera 54 having a second field of view 56 as a subset of the first field of view 34 to improve distance estimation of objects located far away from the LIDAR system 20.

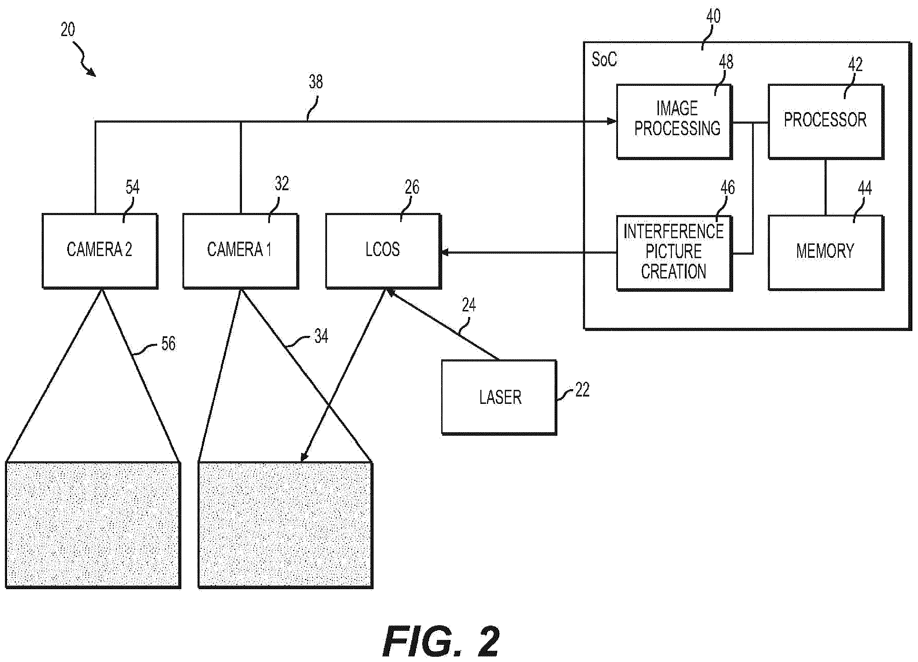

As shown in FIG. 2, the LIDAR system 20 may include a second camera 54 having a second field of view 56 independent of the first field of view 34 to provide a surround view of a wide area about the LIDAR system 20. The second field of view 56 being "independent" of the first field of view 34 means that it substantially covers a different area. The fields of view 34, 56 may have some overlap as required to provide a seamless view. The LIDAR system 20 may also include a plurality of spatial light modulators, each projecting a different second beam to corresponding ones of the fields of view. The LIDAR system 20 may include a plurality of lasers, with each of the lasers illuminating a corresponding one of the spatial light modulators with a corresponding first beam.

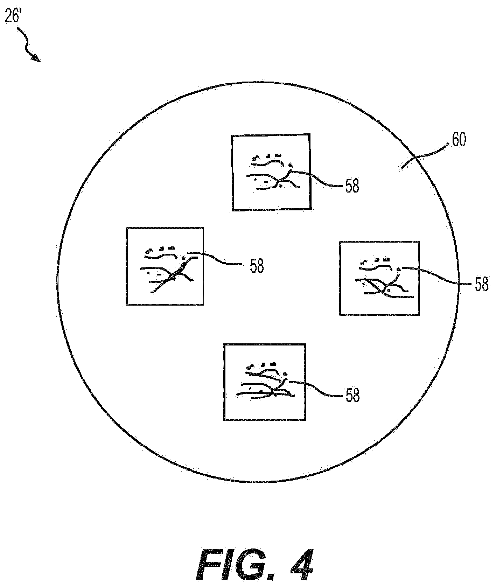

The subject LIDAR system 20 requires only a limited number of patterns, and may be implemented where the spatial light modulator 26 is a liquid crystal device that is switchable between two or more different states. As shown in FIG. 4, the LIDAR system 20 may include a dynamic diffractive optical element 26' including two or more diffractive elements 58 each having a different pattern, and which may be selectively moved into position to intersect the first beam 24 from the laser 22. In other words, the dynamic diffractive optical element 26' is configured to selectively move a selected one of the two or more diffractive elements 58 to intersect the first beam 24, and to thereby generate the corresponding pattern of points 30 in the second beam 28.

The diffractive elements 58 may, for example, be mounted to a disk 60 which is rotated to place the selected one of the diffractive elements 58 in a position to intersect the first beam 24 and to generate the associated of points 30 in the second beam 28.

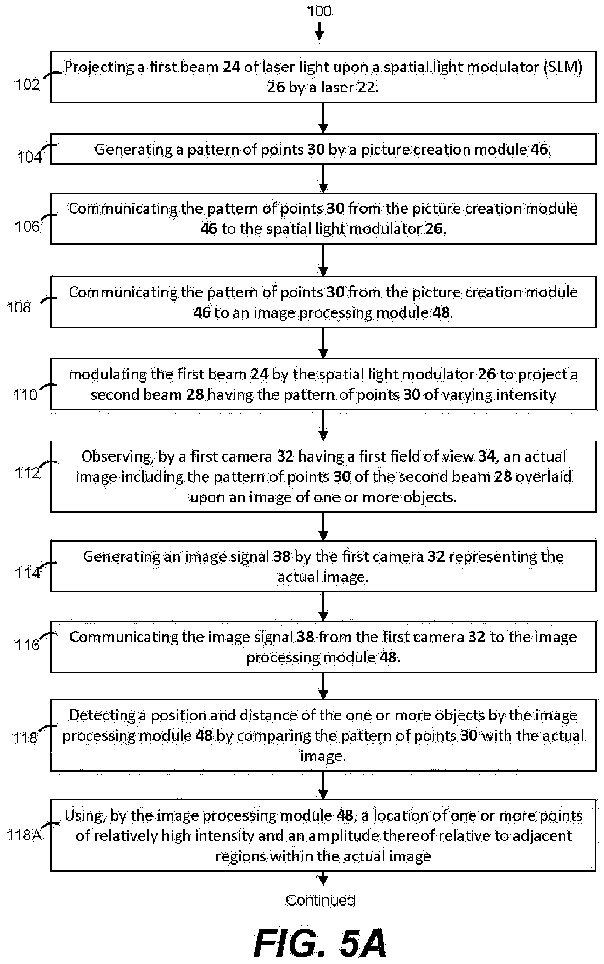

As illustrated in the flow charts of FIGS. 5A - 5C, a method 100 for operating a LIDAR system 20 is also provided. The method 100 includes the steps of 102 projecting a first beam 24 of laser light upon a spatial light modulator (SLM) 26 by a laser 22.

The method 100 also includes 104 generating a pattern of points 30 by a picture creation module 46. Examples of such patterns of points 30 are illustrated in FIGS. 3A - 3C. The pattern of points 30 may be dynamic and change over time. For example, the points may move to scan over different regions of space.

The method 100 also includes 106 communicating the pattern of points 30 from the picture creation module 46 to the spatial light modulator 26. This communication may be, for example, digital or analog, and may be communicated electronically or optically.

The method 100 also includes 108 communicating the pattern of points 30 from the picture creation module 46 to an image processing module 48. This communication may be, for example, digital or analog, and may be communicated electronically or optically.

The method 100 also includes 110 modulating the first beam 24 by the spatial light modulator 26 to project a second beam 28 having the pattern of points 30 of varying intensity. In the example shown in FIGS. 1 and 2, the spatial light modulator is a liquid crystal on silicon (LCOS) device having an array of liquid crystal cells that are configured to modulate an incoming light beam into a pattern as a set by a control signal.

The method 100 also includes 112 observing, by a first camera 32 having a first field of view 34, an actual image including the pattern of points 30 of the second beam 28 overlaid upon an image of one or more objects.

The method 100 also includes 114 generating an image signal 38 by the first camera 32 representing the actual image.

The method 100 also includes 116 communicating the image signal 38 from the first camera 32 to the image processing module 48.

The method 100 also includes 118 detecting a position and distance of the one or more objects by the image processing module 48 by comparing the pattern of points 30 with the actual image. In other words, the image processing module 48 compares the pattern of points 30 that was communicated directly from the picture creation module 46 with the actual image from the first camera 32 in order to detect the position and distance of the one or more objects. This step 118 may include the substep of 118A using, by the image processing module 48, a location of one or more points of relatively high intensity and an amplitude thereof relative to adjacent regions within the actual image.

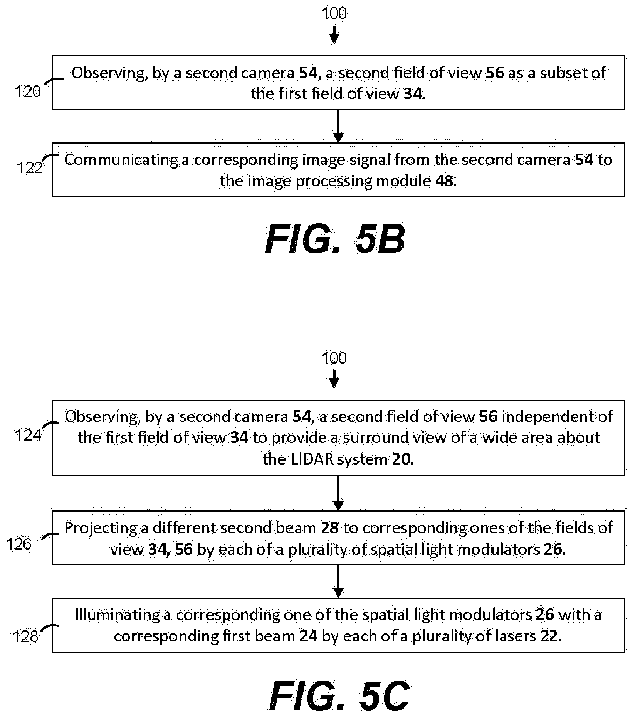

As shown in the flow chart of FIG. 5B, and as illustrated in FIG. 1, the method 100 may also include 120 observing, by a second camera 54, a second field of view 56 as a subset of the first field of view 34. This may provide for more detailed resolution and/or focusing for that second field of view which may be used, for example, for distant objects located far away from the cameras 32, 54 (i.e. far away from the LIDAR system 20).

The method 100 may also include 122 communicating a corresponding image signal from the second camera 54 to the image processing module 48. The image processing module 48 may then use that corresponding image signal to improve distance estimation of objects located far away from the LIDAR system 20.

As shown in the flow chart of FIG. 5C, and as illustrated in FIG. 2, the method 100 may also include 124 observing, by a second camera 54, a second field of view 56 independent of the first field of view 34 to provide a surround view of a wide area about the LIDAR system 20. The two fields of view 34, 56 may have some overlap to prevent gaps therebetween. For example, the fields of view 34, 56 may be combined to provide a seamless panoramic view.

The method 100 may also include 126 projecting a different second beam 28 to corresponding ones of the fields of view 34, 56 by each of a plurality of spatial light modulators 26.

The method 100 may also include 128 illuminating a corresponding one of the spatial light modulators 26 with a corresponding first beam 24 by each of a plurality of lasers 22.

The system, methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors processor architectures, or combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

Obviously, many modifications and variations of the present invention are possible in light of the above teachings and may be practiced otherwise than as specifically described while within the scope of the appended claims.

## Claims

1. A LIDAR system comprising:
a laser projecting a first beam of laser light upon a spatial light modulator (SLM) configured to modulate the first beam to project a second beam having a first pattern of points of relatively high intensity separated from one another by regions of relatively low intensity;
a first camera having a first field of view and generating an image signal of the first pattern of points of the second beam overlaid upon an image of one or more objects within the first field of view;
a picture creation module for generating the first pattern of points and to communicate the first pattern of points to the spatial light modulator; and
an image processing module in communication with the first camera to receive the image signal therefrom and to detect the position and distance of the one or more objects using the image signal.

2. The LIDAR system as set forth in Claim 1, wherein the image processing module uses a location of one or more of the points of relatively high intensity and amplitude thereof relative to adjacent regions within the image signal in detecting the position and distance of the one or more objects.

3. The LIDAR system as set forth in Claim 1, wherein the picture creation module generates the first pattern of points as one of a plurality of different patterns of points to increase the spatial resolution of the LIDAR system.

4. The LIDAR system as set forth in Claim 3, wherein the first pattern of points has points arranged in a two-dimensional array of straight horizontal lines and straight vertical columns, and wherein the points in each of the straight horizontal lines are aligned in a horizontal direction with the points in adjacent ones of the straight horizontal lines.

5. The LIDAR system as set forth in Claim 3, wherein the plurality of different patterns of points includes a second pattern of points having points arranged in a two-dimensional array of straight horizontal lines, and wherein the points in each of said straight horizontal lines are offset in a horizontal direction from the points in adjacent ones of said straight horizontal lines.

6. The LIDAR system as set forth in Claim 3, wherein the plurality of different patterns of points includes a third pattern of points including a first region having a first density of points and including a second region having a second density of points higher than the first density of points.

7. The LIDAR system as set forth in Claim 1, further including a second camera having a second field of view as a subset of the first field of view to improve distance estimation of objects located far away from the LIDAR system.

8. The LIDAR system as set forth in Claim 1, further including a second camera having a second field of view independent of the first field of view to provide a surround view of a wide area about the LIDAR system.

9. The LIDAR system as set forth in Claim 8, further including a plurality of spatial light modulators, each projecting a different second beam to corresponding ones of the fields of view.

10. The LIDAR system as set forth in Claim 9, further including a plurality of lasers, each illuminating a corresponding one of the spatial light modulators with a corresponding first beam.

11. The LIDAR system as set forth in Claim 1, wherein the spatial light modulator includes a dynamic diffractive optical element having two or more diffractive elements, each having a different pattern; and
wherein the dynamic diffractive optical element is configured to selectively move a selected one of the two or more diffractive elements to intersect the first beam.

12. The LIDAR system as set forth in Claim 11, wherein the dynamic diffractive optical element includes the two or more diffractive elements mounted to a disk; and wherein the disk is configured to rotate to move the selected one of the two or more diffractive elements to intersect the first beam.

13. A LIDAR system comprising:
a laser projecting a first beam of laser light upon a spatial light modulator (SLM) being a liquid crystal on silicon (LCOS) device configured to modulate the first beam to project a second beam having a pattern of points of relatively high intensity separated from one another by regions of relatively low intensity;
a first camera having a first field of view and generating an image signal of the pattern of points of the second beam overlaid upon an image of one or more objects within the first field of view;
a controller including an image processing module in communication with the first camera to receive the image signal therefrom and to detect the position and distance of the one or more objects using the image signal; and
wherein the image processing module uses a location of one or more of the points of relatively high intensity and amplitude thereof relative to adjacent regions within the image signal in detecting the position and distance of the one or more objects.

14. A method for operating a LIDAR system comprising:
projecting a first beam of laser light upon a spatial light modulator (SLM) by a laser;
modulating the first beam by the spatial light modulator to project a second beam having a pattern of points of varying intensity;
observing, by a first camera having a first field of view, an actual image including the pattern of the second beam overlaid upon an image of one or more objects;
generating an image signal by the first camera representing the actual image;
communicating the image signal from the first camera to the image processing module;
detecting a position and distance of the one or more objects by the image processing module by comparing the pattern of points with the actual image.

15. The method for operating a LIDAR system as set forth in Claim 14, further including:
generating the pattern of points by a picture creation module;
communicating the pattern of points from the picture creation module to the spatial light modulator; and
communicating the pattern of points from the picture creation module to an image processing module.
